# EUROPEAN PATENT APPLICATION

(11) **EP 4 095 997 A1**
(43) Date of publication of application: **30.11.2022**
(21) Application number: 22166226.5
(22) Date of filing: 31.03.2022
(51) Int. Cl.: H01M 50/211, H01M 50/507, H01M 50/509, H01M 50/528, H01M 50/54, H01M 10/0583, H01M 4/525, H01M 4/587, H01M 10/04, H01M 10/0525, H01M 10/0585, H01M 50/105

(54) **THERMALLY EFFICIENT POUCH CELL ARCHITECTURE**

(30) Priority: 27.05.2021 US 202117332777
(71) Applicant: Bell Helicopter Textron Inc., Fort Worth, TX 76101 (US)
(72) Inventor: Madhusudan, Phalgun, Fort Worth, 76116 (US)
(74) Representative: Barker Brettell LLP

(57) **Abstract**

A battery including a separator film (202), a plurality of cathodes (102), each having a cathode base (104), a first end of each cathode base (104) having a cathode connection portion (106) extending contiguously across the width of the cathode base (104) and free of a cathode material (108), the battery including a plurality of anodes (112), each having an anode base (114), a first end of each anode base (114) having an anode connection portion (116) extending contiguously across the width of the anode base (114) and free of an anode material (118), and the anode connection portion. The cathodes (102) and anodes (112) are in an electrode stack with alternating anodes (112) and cathodes (102) and each separated by a portion of the separator film (202). Each cathode connection portion (106) of each cathode (102) connected to a bus bar (404) at a first end of the battery, and each anode connection portion (116) electrically connected to a bus bar (404) disposed at a second end of the battery.

## Description

### TECHNICAL FIELD

The present invention relates generally to a system and method for providing a thermally efficient pouch cell battery, and, in particular embodiments, to a system and method for providing a pouch cell battery with full width electrodes that are disposed at opposite ends of the pouch cell battery to provide improved current and heat distribution.

### BACKGROUND

As more devices and vehicles move to electric power, the need for increased energy storage to power those device and vehicles has grown. In particular, research into creating more power dense storage has resulted in high power battery cells capable of increasingly dense power storage, as well as high current drain, particularly for electric vehicles. However, with high power densities and high charge or discharge rates, management of heat produced by the high current charging and discharging increasingly becomes an engineering challenge.

Many modern batteries take on two different forms, namely cylindrical cells and pouch cells. Cylindrical batteries use two continuous electrodes rolled in a spiral, while pouch cell batteries tend to use multiple electrodes in a stack configuration. However, while the pouch cell arrangement provides for greater energy density within given space, the arrangement of the stacked electrodes, particularly for high current drain application, can lead to localized heat buildup in the battery, reducing performance, storage capacity and battery lifetime.

### SUMMARY

An embodiment battery includes a separator film, a plurality of cathodes, each cathode of the plurality of cathodes having a cathode base and a cathode material disposed on the cathode base, where a first end of the cathode base of the respective cathode has a cathode connection portion that is free of the cathode material, where the cathode material of the respective cathode extends contiguously across a width of the cathode base of the respective cathode, and further extends contiguously from a second end of the cathode base of the respective cathode opposite the first end to the cathode connection portion of the respective cathode, and where the cathode connection portion of the respective cathode extends contiguously across the width of the cathode base of the respective cathode, a plurality of anodes, each anode of the plurality of anodes having an anode base and an anode material disposed on the anode base, where a first end of the anode base of the respective anode has an anode connection portion that is free of the anode material, where the anode material of the respective anode extends contiguously across a width of the anode base of the respective anode, and further extends contiguously from a second end of the anode base of the respective anode opposite the first end to the anode connection portion of the respective anode, and where the anode connection portion of the respective anode extends contiguously across the width of the anode base of the respective anode, where the cathodes of the plurality of cathodes and the anodes of the plurality of anodes are disposed in an electrode stack with alternating anodes and cathodes, where each cathode of the plurality of cathodes is separated from each other cathode of the plurality of cathodes, and from each anode of the plurality of anodes by a portion of the separator film, and where the cathode connection portion of each cathode of the plurality of cathodes is electrically connected to a bus bar disposed at a first end of the battery, and where the anode connection portion of each anode of the plurality of anodes is electrically connected to a bus bar disposed at a second end of the battery opposite the first end.

An embodiment battery pack includes a plurality of bus bars, and a plurality of cells. Each cell includes a separator film, and an electrode stack including a plurality of electrodes, each electrode of the plurality of electrodes having an electrode base and an electrode material disposed on the electrode base, where a first end of the electrode base of the respective electrode has an electrode connection portion that is free of the electrode material, where the electrode material of the respective electrode extends contiguously across a width of the electrode base of the respective electrode, and further extends contiguously from a second end of the electrode base of the respective electrode opposite the first end to the electrode connection portion of the respective electrode, and where the electrode connection portion of the respective cathode extends contiguously across the width of the electrode base of the respective electrode, where adjacent electrodes of the plurality of electrodes are separated from each other by a portion of the separator film, and where first electrode connection portions of a first group of electrodes of the plurality of electrodes extend from between a first edge of the separator film and a second edge of the separator film opposite the first edge to past the first edge of the separator film and are electrically connected to form a first terminal, where second electrode connection portions of a second group of electrodes of the plurality of electrodes extend from between the first edge of the separator film and the second edge of the separator film to past the second edge of the separator film, and are electrically connected to form a second terminal, where each bus bar of the plurality of bus bars connects cells of a first group of cells of the plurality of cells in parallel by connecting the first terminals or the second terminals of the cells of the first group of cells to each other, and where at least one of the bus bars connects a second group of cells of the plurality of cells in series with a third group of cells by connecting the first terminals of the cells of the first group of cells to the second terminals of the cells of the second group of cells.

An embodiment method for providing a battery includes providing a separator film, providing a plurality of cathodes, each cathode of the plurality of cathodes having a cathode base and a cathode material disposed on the cathode base, where a first end of the cathode base of the respective cathode has a cathode connection portion that is free of the cathode material, where the cathode material of the respective cathode extends contiguously across a width of the cathode base of the respective cathode, and further extends contiguously from a second end of the cathode base of the respective cathode opposite the first end to the cathode connection portion of the respective cathode, and where the cathode connection portion of the respective cathode extends contiguously across the width of the cathode base of the respective cathode, providing a plurality of anodes, each anode of the plurality of anodes having an anode base and an anode material disposed on the anode base, where a first end of the anode base of the respective anode has an anode connection portion that is free of the anode material, where the anode material of the respective anode extends contiguously across a width of the anode base of the respective anode, and further extends contiguously from a second end of the anode base of the respective anode opposite the first end to the anode connection portion of the respective anode, and where the anode connection portion of the respective anode extends contiguously across the width of the anode base of the respective anode, disposing the plurality of cathodes on a first side of the separator film, where the cathode connection portion of each cathode of the plurality of cathodes extends from between a first edge of the separator film and a second edge of the separator film opposite the first edge to past the first edge of the separator film, disposing the plurality of anodes on a second side of the separator film, where the anode connection portion of each anode of the plurality of cathodes extends from between the first edge of the separator film and the second edge of the separator film to past the second edge of the separator film, forming an electrode stack from the separator film, the plurality of cathodes and the plurality of anodes, where the electrode stack has alternating anodes and cathodes, and where each cathode of the plurality of cathodes is separated in the electrode stack from each other cathode of the plurality of cathodes, and from each anode of the plurality of anodes by a portion of the separator film, and electrically connecting the cathode connection portions of the cathodes of the plurality of cathodes to a first bus bar disposed at a first end of the battery. and electrically connecting anode connection portions of the anodes of the plurality of anodes to a second bus bar disposed at a second end of the battery opposite the first end.

### BRIEF DESCRIPTION OF THE DRAWINGS

For a more complete understanding of the present invention, and the advantages thereof, reference is now made to the following descriptions taken in conjunction with the accompanying drawings, in which:
Fig. 1A is a diagram illustrating electrodes according to some embodiments;
Fig. 1B is a diagram illustrating current flow in the electrodes according to some embodiments;
Fig. 2 is a diagram illustrating electrodes disposed on a separator film according to some embodiments;
Figs. 3A-3B are diagrams illustrating a stacked electrode structure according to some embodiments;
Figs. 4A-4B are diagrams illustrating an electrode stack attached to bus bars according to some embodiments;
Fig. 5 is a diagram illustrating a battery pack according to some embodiments; and
Fig. 6 is a flow diagram illustrating a method of forming a battery and battery pack according to some embodiments.

### DETAILED DESCRIPTION OF ILLUSTRATIVE EMBODIMENTS

Illustrative embodiments of the system and method of the present disclosure are described below. In the interest of clarity, all features of an actual implementation may not be described in this specification. It will of course be appreciated that in the development of any such actual embodiment, numerous implementation-specific decisions may be made to achieve the developer's specific goals, such as compliance with system-related and business-related constraints, which will vary from one implementation to another. Moreover, it should be appreciated that such a development effort might be complex and time-consuming but would nevertheless be a routine undertaking for those of ordinary skill in the art having the benefit of this disclosure.

Reference may be made herein to the spatial relationships between various components and to the spatial orientation of various aspects of components as the devices are depicted in the attached drawings. However, as will be recognized by those skilled in the art after a complete reading of the present disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

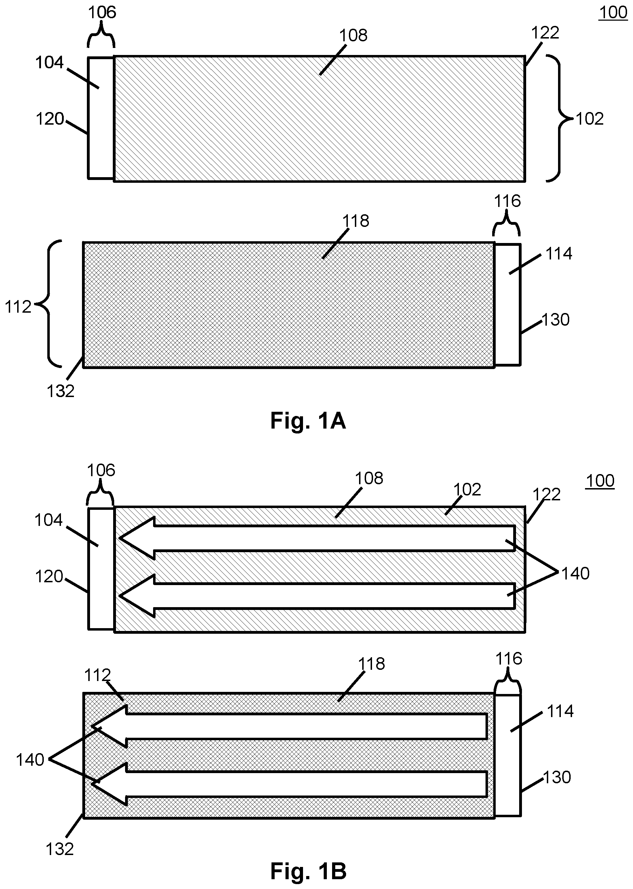

Fig. 1A is a diagram illustrating electrodes 100 according to some embodiments. The electrodes 100 for a battery may include a cathode 102 and anode 112. The cathode 102 may have a cathode base 104, and the anode 112 may have an anode base 114 that are each formed from a conductive material such as copper, aluminum, gold, a metallic alloy, or another conductive material. In some embodiments, the cathode base 104 may be formed from a different material than the anode base 114. For example, the cathode base 104 may be copper, while the anode base 114 may be aluminum. The cathode base 104 and anode base 114 act as current collectors for the electrodes, allowing movement of current or electrons out of the battery, and providing support for electrode materials 108, 118. In some embodiments, a cathode material 108 is disposed on the cathode base 104, and an anode material 118 is disposed on the anode base 114. The cathode material 108 and anode material 118 may be coatings or layers formed on a portion of the respective cathode base 104 and anode base 114. The electrode materials 108, 118 maybe formed by chemical vapor deposition (CVD), physical vapor deposition (PVD), plasma enhanced chemical vapor deposition (PECVD), or another deposition process. In other embodiments, the electrode material 108, 118 may be deposited on the respective electrode base 104, 114, and cured, sintered, or otherwise affixed to the electrode base 104, 114. In some embodiments, the battery may be a lithium ion battery (Li-ion) using a lithium based chemistry, where the cathode material 108 is lithium cobalt oxide (LiCoO₂), and the anode material 118 is graphite. However, other cathode materials 108 may be used, such as lithium iron phosphate (LiFePO), lithium manganese oxide (LiMn₂O₄), lithium nickel oxide (LiNiO₂), or the like. Similarly, the anode material 108 may be a material such as sodium, lithium, silicon, or silicon oxide aluminum, tin, or the like. In other embodiments, the battery may use chemistry such as a zinc-air, nickel-cadmium (NiCd), nickel-metal hydride (NiMH), lithium iron phosphate (LiFePO₄), lithium-ion polymer (Li-ion polymer/LiPo), or the like, with appropriate electrode materials 108, 118.

The cathode material 108 and anode material 118 may be formed on only a portion of the cathode base 104 and anode base 114, so that the cathode 102 and anode 112 have a cathode contact portion 106 and anode contact portion 116, respectively, without electrode material 108, 118. The cathode contact portion 106 and anode contact portion 116 maybe exposed electrode base material or a bare anode or bare cathode that is free of electrode material so that the electrodes 100 may be efficiently electrically connected to other conductive elements. The cathode contact portion 106 may disposed at a first end 120 of the cathode base 104, and the cathode material 108 may be disposed at a second end 122 of the cathode base 104, with the cathode material 108 extending from the second end 122 to the cathode contact portion 106. Similarly, the anode contact portion 116 may disposed at a first end 130 of the anode base 114, and the anode material 118 may be disposed at a second end 132 of the anode base 114, with the anode material 118 extending from the second end 132 to the anode contact portion 116.

In some embodiments, the contact portions 106, 116 extend substantially the entire width of the respective electrode 100, which provide for more linear current flow along length of the electrodes 100, and more uniform heat generation in each electrode 100.

Fig. 1B is a diagram illustrating current flow 140 in the electrodes 100 according to some embodiments. The current flow 140 in the cathode 102 is from the second end 122 and from the cathode material 108 to the first end 120 and the cathode contact portion 106. The current flow 140 in the anode 112 is from the first end 130 and from the anode contact portion 116 to the second end 132 and into the anode material 118. However, the current density in the cathode 102 and anode 112 is densest nearest the contact portions 106, 116. This results in the greatest heat concentration nearest the contact portions 106, 116 due to the current density. Using contact portions 106, 116 that extend the width of the electrode 100 allows the current being drawn from, or moved into, the electrode material 108, 118 to be spread across the entire width of the electrode 100, rather than concentrated at one corner of an electrode, as when the contact region is a small tab at the end of the electrode. This avoids non-uniform heat buildup associated with of non-uniform current pathways for contact portions that extend only partway across the width of the electrode.

The electrodes 100 may also be arranged in the battery so that the cathode contact portion 106 is at the opposite end of the battery from the anode contact portion 116. This arrangement of the contact portions 106, 116 at opposite ends of the battery permits the contact portions 106, 116 to be exposed outside the battery without the risk of the cathode contact portion 106 inadvertently contacting the anode contact portion 116. This also results in overall cooler operation and more uniform heat distribution, as heat for the different electrode types is concentrated at opposite ends of the battery. Separating the contact portions 106, 116 for opposing electrodes 100 at opposite ends of the batteries also permits the use of simple heat sinks, fins, or a common electric contact plate to pull heat away from the battery. The separate contact portions 106, 116 at opposite ends of the battery result in positive and negative terminals at the opposite ends of the battery, and in some embodiments, a conductive end plate or common bus bar may be used to join multiple batteries to form a battery pack, but also allowing the common bus bar to act as a heat sink to cool the individual batteries.

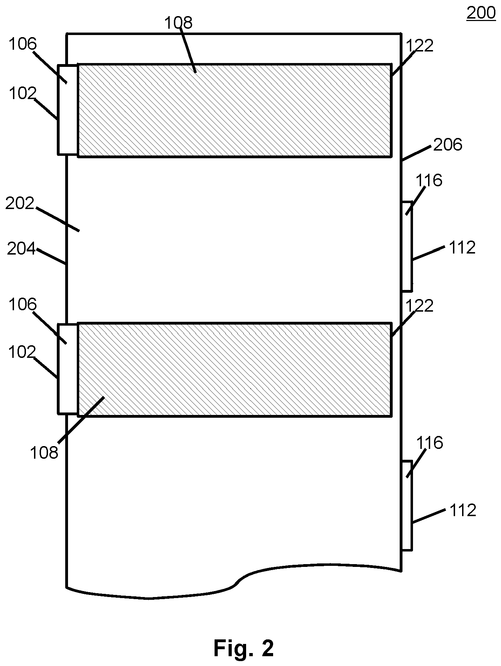

Fig. 2 is a diagram illustrating electrodes disposed on a separator film 202 according to some embodiments. In some embodiments, a continuous separator film 202 is provided to electrically insulate the cathode 102 from the anode 112 and provide ion exchange in the cell. The separator film 202 maybe formed from a polymer such a polyolefin, polyethylene, polypropylene, or another suitable material. In constructing a battery, the electrodes 100 may be disposed on the separator film 202. In some embodiments, a plurality of cathodes 102 may be disposed on one side of the separator film 202, and a plurality of anodes 112 maybe disposed on an opposite side of the separator film 202. The cathodes 102 and anodes 112 maybe spaced apart from each other so that the electrodes align to stack without touching each other.

In some embodiments, each electrode 100 extends beyond an edge 204, 206 of the of separator film 202. In some embodiments, the cathode contact portion 106 of each cathode 102 extends past, or across, a first edge 204 of the separator film 202, with the cathode material 108 being disposed between the first edge 204 and a second edge 206 of the separator film 202 opposite the first edge 204. Similarly, the anodes 112 maybe disposed on an opposite side of the separator film 202 and the anode contact portion 116 of each anode 112 extends past or across the second edge 206 of the separator film 202, with the anode material 118 being disposed between the first edge 204 and a second edge 206.

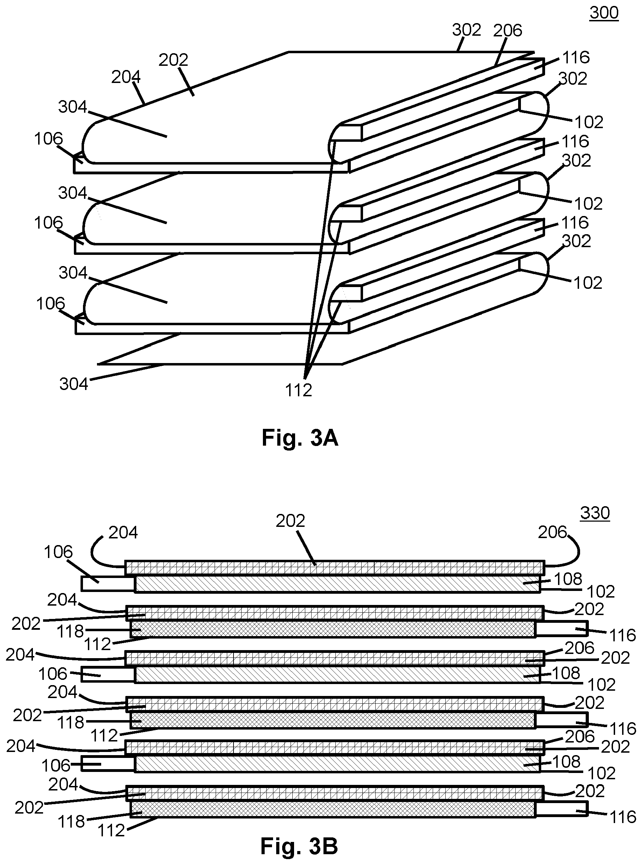

Figs. 3A-3B are diagrams illustrating a stacked electrode structure 300 according to some embodiments. Fig. 3A illustrates a three dimensional view of the stacked electrode structure 300 according to some embodiments. Fig. 3B is a cutaway view illustrating the stacked electrode structure 330 according to some embodiments. In some embodiments, the stacked electrode structure 300 is formed in an "accordion" arrangement, with the separator film 202 folded over itself to create multiple layers, each having an electrode separated by a portion of the separator film 202. Layers of the separator film 202 may be bounded by layer ends 302, 304 where the separator film 202 starts or stops a layer or section. Each cathode 102 and anode 112 may be disposed between a first layer end 302 and a second layer end 304, with one electrode per layer. Fig. 3B further illustrates that the cathodes 102 and anodes 112 are stacked in an alternating arrangement, so each cathode 102 is adjacent to an anode 112, but separated by the separator film 202. Similarly, each anode 112 is adjacent to a cathode 102, and separated by the separator film 202. Additionally, the cathode contact portions 106 extend past the first edge 204 of the separator film 202, while the anode contact portions 116 extend past the second edge 206 of the separator film 202, with the second edge 206 being opposite the separator film 202 from the first edge 204.

While the embodiments described herein are described in terms of an accordion arrangement, other separator film 202 arrangements maybe used according to the presented principles. For example, in some embodiments, the separator film 202 may be discontinuous, with separate pieces of separator film 202 between the electrodes 100 to form the stacked electrode structure. In other embodiments, the separator film 202 may be rolled into a spiral, rather than an accordion arrangement.

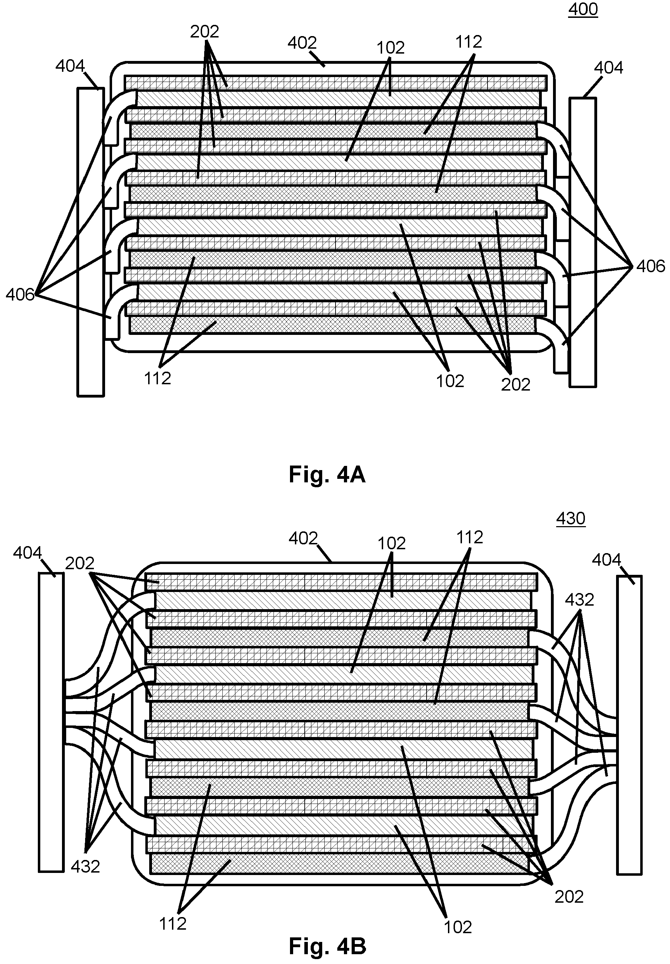

Figs. 4A-4B are diagrams illustrating an electrode stack attached to bus bars 404 according to some embodiments. Fig. 4A illustrates a battery structure 400 having electrode contact portions 406 individually bonded to bus bars 404 according to some embodiments. An electrode stack with alternating cathodes 102 and anodes 112 separated by layers of separator film 202 may be provided, and a casing 402, a such as an insulating material, polymer, shrink wrap, or the like, maybe provided to protect and insulate the electrode stack. An electrolyte (not shown) may be provided to facilitate ion exchange between the cathodes 102 and anodes 1121 through the separator film 202. The casing 402 may be provided to enclose the electrolyte. In some embodiments, the electrolyte may be a gel or liquid material such as a polymer gel comprising lithium ion complexes such as ethylene carbonate, diethyl carbonate or the like and a non-coordinating anion salts such as lithium hexafluorophosphate (LiPF6), lithium hexafluoroarsenate monohydrate (LiAsF₆), lithium perchlorate (LiClO₄), lithium tetrafluoroborate (LiBF₄), and lithium triflate (LiCF₃SO₃) or the like. In other embodiments, the electrolyte may be a solid electrolyte, or an aqueous electrolyte.

In some embodiments, the electrode contact portions 406 on each end of a battery may be joined to a common bus bar 404. For example, the electrode contact portions 406 for each cathode 102 may be disposed at one end of the electrode stack, and may each extend past a same edge of the separator film 202 to a bus bar 404. Similarly, the electrode contact portions 406 or each anode maybe disposed at another end of the electrode stack and my each extend past a same edge of the separator film 202 to another bus bar 404. In the embodiments illustrated in Fig. 4A, each electrode contact portion 406 is separately attached to a bus bar 404, and may be attached by crimping, spot welding, soldering, ultrasonic welding, using a connector such as a rivet, bolt, screw, adhesive, or the like. In some embodiments, the electrode contact portion 406 may be bent and the bent portion may be attached to the bus bar 404. The bus bar 404 may, in some embodiments, be a conductive material having beneficial thermal transfer properties to draw heat from each cathode 102 or anode 112.

Fig. 4B illustrates a battery structure 430 having electrode contact portions 406 bonded as a group to bus bars 404 according to some embodiments. In some embodiments, the electrode contact portions 432 may be bonded to each other, and then bonded to, or placed in contact with, a bus bar 404. The electrode contact portions 432 may be attached to each other by crimping, spot welding, soldering, ultrasonic welding, using a connector such as a rivet, bolt, screw, adhesive, or the like, and then may be attached to the bus bar 404 using a similar or different process for providing thermal and electrical conductivity between the electrode contact portions 432 and the bus bar.

While the electrode contact portions 406, 432 in Figs 4A and 4B are shown to be relatively large in comparison to the rest of the battery structure 400, 430, the electrode contact portions 406, 432 maybe sized according to the requirements for connecting the electrode contact portions 406, 432 to each other or to the bus bars 404. After bonding or electrical connection to each other or to a bus bar 404, the contact portions 406, 432 act as a positive terminal or a negative terminal. In some embodiments, the electrode contact portions 406, 432 may extend past the edges of the separator film 202 by a distance of about imm, and in other embodiments, different lengths maybe used. Additionally, each electrode contact portion 406, 432 may have a different length. For example, with reference to Fig. 4B, where the electrode contact portions 432 are bent to contact other electrode contact portions 432 at a connection location, some electrode contact portions 432 may need to extend farther to reach the location where the electrode contact portions 432 are connected, and may be sized accordingly. In such an example, cathodes 102 or anodes 112 that are placed farther from the connection location may be longer than electrode contact portions 432 closer to the connection location. Thus, the electrode contact portions 432, after being bonded to each other, form a uniform face for contact with a bus bar 404. Alternatively, the electrode contact portions 432 may be bonded to each other, and then a surface of the bonded electrode portion group may be finished, modified, cut, milled, or otherwise shaped to achieve the desired final shape for the ends of the electrode contact portions 432, which may then be connected to a bus bar 404.

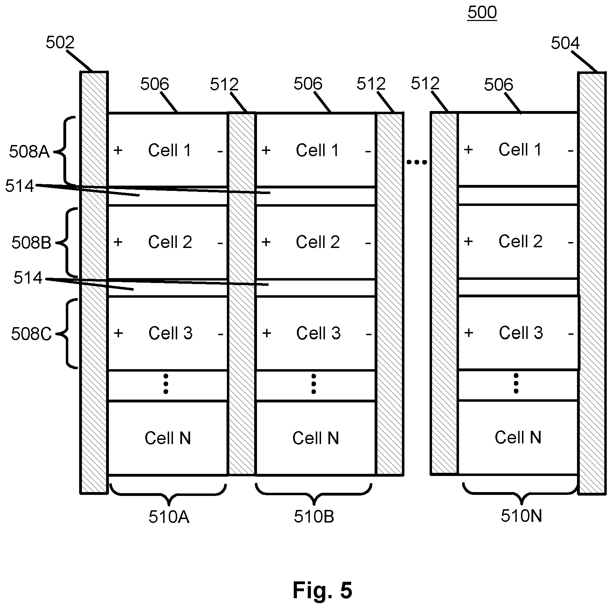

Fig. 5 is a diagram illustrating a battery pack 500 according to some embodiments. One or more cells 506, formed as discussed above, may be disposed in a battery pack 500 formed from one or more rows 508A...508N or groups 510A...510N of cells. The arrangement shown in Fig. 5 illustrates a 3-series/4-parallel (3P4P) arrangement of cells 506. Each cell in a row 508A...508N maybe in series with the other cells 506 in the row. Additional, each cell in row 508A...508N maybe in parallel with corresponding cells 506 in another row 506A...508N to form the groups 510A...510N. A positive bus 502 and negative bus 504 may provide connectivity to other circuits outside of the battery pack 500. One or more conductive plates 512 may be provided to connect groups of cells, and act as an inter-cell bus bar to connect cells that are in series. The conductive plates and busses 502 provide electrical connections between cells 516 and provide support and organization for the cells 516. Additionally the conductive plate 512 and busses 502, 504 maybe used to space the cells 516 apart to provide airflow paths 514 between cells to improve cooling.

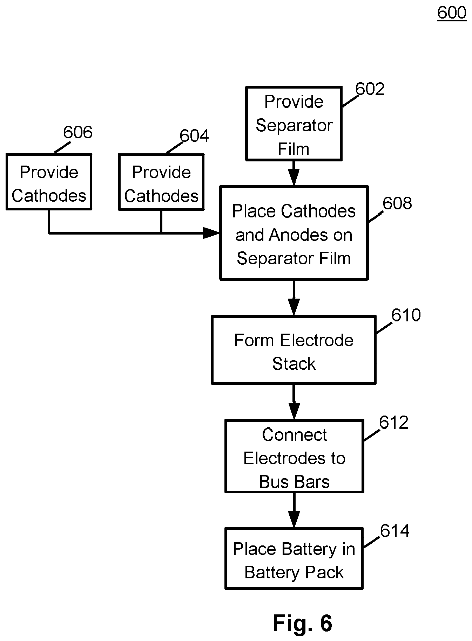

Fig. 6 is a flow diagram illustrating a method 600 of forming a battery and battery pack according to some embodiments. In block 602, a separator film is provided. In block 604, a plurality of cathodes is provided. Each cathode has a cathode base and a cathode material disposed on the cathode base. A first end of the cathode base has a cathode connection portion that is free of the cathode material. The cathode material extends contiguously across a width of the cathode base of the respective cathode, and extends contiguously from a second end of the cathode base to the cathode connection portion. Additionally, the cathode connection portion of the cathode extends contiguously across the width of the cathode base. In some embodiments, the cathode material comprises lithium cobalt oxide (LiCoO₂).

In block 606, a plurality of anodes is provided. Each anode has an anode base and an anode material disposed on the anode base. A first end of the anode base has an anode connection portion that is free of the anode material. The anode material of the respective anode extends contiguously across a width of the anode base of the respective anode, and extends contiguously from a second end of the anode base to the anode connection portion of the respective anode. Additionally, the anode connection portion of the anode extends contiguously across the width of the anode base. In some embodiments, the anode material comprises graphite.

In block 608, the cathodes are disposed on a first side of the separator film, and the anodes are disposed on a second side of the separator film. The cathode connection portion of each cathode extends from between a first edge of the separator film and a second edge of the separator film to past, or outside, the first edge of the separator film. The anode connection portion of each anode extends from between the first edge of the separator film and the second edge of the separator film to past, or outside, the second edge of the separator film. In some embodiments, the cathode connection portion of each cathode extends past the first edge by about 1 mm, and the anode connection portion of each anode extends past the second edge by about 1 mm.

In block 610, an electrode stack is formed from the separator film, the cathodes and the anodes. The electrode stack has alternating anodes and cathodes, and each cathode is separated in the electrode stack from each other cathode, and is also separated from each anode of the plurality of anodes by a portion of the separator film. In some embodiments, the separator film is formed into an accordion arrangement, and a single cathode or anode maybe disposed in each section of the accordion arrangement.

In block 612, the electrode connection portions are electrically connected to bus bars. The cathode connection portions of the cathodes are electrically connected to a first bus bar at the first end of the battery, and the anode connection portions of the anodes are electrically connected to a second bus bar at a second end of the battery. In some embodiments, electrically connecting the cathode connection portions to the first bus bar comprises bonding the cathode connection portions to each other, and then connecting the bonded cathode connection portions to the first bus bar, and electrically connecting the anode connection portions the second bus bar comprises bonding the anode connection portions to each other, and then connecting the bonded anode connection portions to the second bus bar. In other embodiments, each of the cathode connection portions may be bent and the individually bond to the bus bar disposed at the first end of the battery, and each of the anode connection portions may be bent and then individually bonded to the bus bar disposed at the second end of the battery.

In block 614, the battery is provided in a battery pack. In some embodiments, battery is provided as part of a first group of cells that are electrically connected to each other in parallel and that are electrically connected to each other by the first bus and the second bus. The group of cells battery may provided in series with a second group of cells having second cells electrically connected to each other in parallel, with the first group of cells and the second group of cells all connected to one of the first bus bar or the second bus bar. The first bus bar and second bus bar may retain the cells of the first group of cells with airflow paths between adjacent cells of the first group of cells.

In view of the foregoing, an embodiment battery includes a separator film, a plurality of cathodes, each cathode of the plurality of cathodes having a cathode base and a cathode material disposed on the cathode base, where a first end of the cathode base of the respective cathode has a cathode connection portion that is free of the cathode material, where the cathode material of the respective cathode extends contiguously across a width of the cathode base of the respective cathode, and further extends contiguously from a second end of the cathode base of the respective cathode opposite the first end to the cathode connection portion of the respective cathode, and where the cathode connection portion of the respective cathode extends contiguously across the width of the cathode base of the respective cathode, a plurality of anodes, each anode of the plurality of anodes having an anode base and an anode material disposed on the anode base, where a first end of the anode base of the respective anode has an anode connection portion that is free of the anode material, where the anode material of the respective anode extends contiguously across a width of the anode base of the respective anode, and further extends contiguously from a second end of the anode base of the respective anode opposite the first end to the anode connection portion of the respective anode, and where the anode connection portion of the respective anode extends contiguously across the width of the anode base of the respective anode, where the cathodes of the plurality of cathodes and the anodes of the plurality of anodes are disposed in an electrode stack with alternating anodes and cathodes, where each cathode of the plurality of cathodes is separated from each other cathode of the plurality of cathodes, and from each anode of the plurality of anodes by a portion of the separator film, and where the cathode connection portion of each cathode of the plurality of cathodes is electrically connected to a bus bar disposed at a first end of the battery, and where the anode connection portion of each anode of the plurality of anodes is electrically connected to a bus bar disposed at a second end of the battery opposite the first end.

In some embodiments, the cathode connection portion of each cathode of the plurality of cathodes extends from between a first edge of the separator film and a second edge of the separator film opposite the first edge to past the first edge of the separator film, and the anode connection portion of each anode of the plurality of cathodes extends from between the first edge of the separator film and the second edge of the separator film to past the second edge of the separator film. In some embodiments, the cathode connection portion of each cathode of the plurality of cathodes extends past the first edge by about 1 mm, and the anode connection portion of each anode of the plurality of anodes extends past the second edge by about 1 mm. In some embodiments, the separator film is formed in an accordion arrangement. In some embodiments, the anode material includes graphite, and the cathode material includes lithium cobalt oxide (LiCoO₂). In some embodiments, the cathode connection portions of the cathodes of the plurality of cathodes are connected to each other, and end surfaces of the cathode connection portions are connected to the bus bar disposed at the first end of the battery, and the anode connection portions of the anodes of the plurality of anodes are connected to each other, and end surfaces of the anode connection portions are connected to the bus bar disposed at the second end of the battery. In some embodiments, the cathode connection portion of each cathode of the plurality of cathodes is individually connected to the bus bar disposed at the first end of the battery, and the anode connection portion of each anode of the plurality of anodes is individually connected to the bus bar disposed at the second end of the battery.

An embodiment battery pack includes a plurality of bus bars, and a plurality of cells. Each cell includes a separator film, and an electrode stack including a plurality of electrodes, each electrode of the plurality of electrodes having an electrode base and an electrode material disposed on the electrode base, where a first end of the electrode base of the respective electrode has an electrode connection portion that is free of the electrode material, where the electrode material of the respective electrode extends contiguously across a width of the electrode base of the respective electrode, and further extends contiguously from a second end of the electrode base of the respective electrode opposite the first end to the electrode connection portion of the respective electrode, and where the electrode connection portion of the respective cathode extends contiguously across the width of the electrode base of the respective electrode, where adjacent electrodes of the plurality of electrodes are separated from each other by a portion of the separator film, and where first electrode connection portions of a first group of electrodes of the plurality of electrodes extend from between a first edge of the separator film and a second edge of the separator film opposite the first edge to past the first edge of the separator film and are electrically connected to form a first terminal, where second electrode connection portions of a second group of electrodes of the plurality of electrodes extend from between the first edge of the separator film and the second edge of the separator film to past the second edge of the separator film, and are electrically connected to form a second terminal, where each bus bar of the plurality of bus bars connects cells of a first group of cells of the plurality of cells in parallel by connecting the first terminals or the second terminals of the cells of the first group of cells to each other, and where at least one of the bus bars connects a second group of cells of the plurality of cells in series with a third group of cells by connecting the first terminals of the cells of the first group of cells to the second terminals of the cells of the second group of cells.

In some embodiments, the electrode connection portion of each electrode of the plurality of electrodes of each cell in the plurality of cells extends past a respective edge of the separator film edge by about 1 mm. In some embodiments, the separator film of each cell of the plurality of cells is formed in an accordion arrangement. In some embodiments, the electrode connection portions of the electrodes of the first group of electrodes in each cell are crimped together to form the first terminal of the respective cell and are connected to a first bus bar of the plurality of bars, and the electrode connection portions of the electrodes of the second group of electrodes in each cell are crimped together to form the second terminal of the respective cell and are connected to a second bus bar of the plurality of bars. In some embodiments, the plurality of bus bars retain the cells of the plurality of cells in a series-parallel configuration. In some embodiments, each bus bar of the plurality of bus bars retains cells connected to the respective bus bar with an airflow path between adjacent cells.

An embodiment method for providing a battery includes providing a separator film, providing a plurality of cathodes, each cathode of the plurality of cathodes having a cathode base and a cathode material disposed on the cathode base, where a first end of the cathode base of the respective cathode has a cathode connection portion that is free of the cathode material, where the cathode material of the respective cathode extends contiguously across a width of the cathode base of the respective cathode, and further extends contiguously from a second end of the cathode base of the respective cathode opposite the first end to the cathode connection portion of the respective cathode, and where the cathode connection portion of the respective cathode extends contiguously across the width of the cathode base of the respective cathode, providing a plurality of anodes, each anode of the plurality of anodes having an anode base and an anode material disposed on the anode base, where a first end of the anode base of the respective anode has an anode connection portion that is free of the anode material, where the anode material of the respective anode extends contiguously across a width of the anode base of the respective anode, and further extends contiguously from a second end of the anode base of the respective anode opposite the first end to the anode connection portion of the respective anode, and where the anode connection portion of the respective anode extends contiguously across the width of the anode base of the respective anode, disposing the plurality of cathodes on a first side of the separator film, where the cathode connection portion of each cathode of the plurality of cathodes extends from between a first edge of the separator film and a second edge of the separator film opposite the first edge to past the first edge of the separator film, disposing the plurality of anodes on a second side of the separator film, where the anode connection portion of each anode of the plurality of cathodes extends from between the first edge of the separator film and the second edge of the separator film to past the second edge of the separator film, forming an electrode stack from the separator film, the plurality of cathodes and the plurality of anodes, where the electrode stack has alternating anodes and cathodes, and where each cathode of the plurality of cathodes is separated in the electrode stack from each other cathode of the plurality of cathodes, and from each anode of the plurality of anodes by a portion of the separator film, and electrically connecting the cathode connection portions of the cathodes of the plurality of cathodes to a first bus bar disposed at a first end of the battery. and electrically connecting anode connection portions of the anodes of the plurality of anodes to a second bus bar disposed at a second end of the battery opposite the first end.

In some embodiments, the cathode connection portion of each cathode of the plurality of cathodes extends past the first edge by about 1 mm, and the anode connection portion of each anode of the plurality of anodes extends past the second edge by about 1 mm. In some embodiments, the forming an electrode stack includes forming the separator film is formed into an accordion arrangement. In some embodiments, the anode material includes graphite, and the cathode material includes lithium cobalt oxide (LiCoO₂). In some embodiments, the electrically connecting the cathode connection portions of the cathodes to the first bus bar includes bonding the cathode connection portions of the cathodes of the plurality of cathodes to each other, and connecting the bonded cathode connection portions to the first bus bar, and the electrically connecting the anode connection portions of the anodes to the second bus bar includes bonding the anode connection portions of the anodes of the plurality of anodes to each other, and connecting the bonded anode connection portions to the second bus bar. In some embodiments, the electrically connecting the cathode connection portions to the bus bar includes bending each of the cathode connection portions and individually bonding each of the cathode connection portions to the bus bar disposed at the first end of the battery, and the electrically connecting the anode connection portions to the bus bar includes bending each of the anode connection portions and individually bonding each of the anode connection portions to the bus bar disposed at the second end of the battery. In some embodiments, the method further includes providing the battery in a battery pack and as part of a first group of cells that are electrically connected to each other in parallel and that are electrically connected to each other by the first bus and the second bus, and providing the first group of cells in series with a second group of cells having second cells electrically connected to each other in parallel, and wherein the first group of cells and the second group of cells are all connected to one of the first bus bar or the second bus bar. The first bus bar and second bus bar retain the cells of the first group of cells with airflow paths between adjacent cells of the first group of cells.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A battery, comprising:
a separator film;
a plurality of cathodes, each cathode of the plurality of cathodes having a cathode base and a cathode material disposed on the cathode base, wherein a first end of the cathode base of the respective cathode has a cathode connection portion that is free of the cathode material, wherein the cathode material of the respective cathode extends contiguously across a width of the cathode base of the respective cathode, and further extends contiguously from a second end of the cathode base of the respective cathode opposite the first end to the cathode connection portion of the respective cathode, and wherein the cathode connection portion of the respective cathode extends contiguously across the width of the cathode base of the respective cathode; and
a plurality of anodes, each anode of the plurality of anodes having an anode base and an anode material disposed on the anode base, wherein a first end of the anode base of the respective anode has an anode connection portion that is free of the anode material, wherein the anode material of the respective anode extends contiguously across a width of the anode base of the respective anode, and further extends contiguously from a second end of the anode base of the respective anode opposite the first end to the anode connection portion of the respective anode, and wherein the anode connection portion of the respective anode extends contiguously across the width of the anode base of the respective anode;
wherein the cathodes of the plurality of cathodes and the anodes of the plurality of anodes are disposed in an electrode stack with alternating anodes and cathodes;
wherein each cathode of the plurality of cathodes is separated from each other cathode of the plurality of cathodes, and from each anode of the plurality of anodes by a portion of the separator film; and
wherein the cathode connection portion of each cathode of the plurality of cathodes is electrically connected to a bus bar disposed at a first end of the battery, and wherein the anode connection portion of each anode of the plurality of anodes is electrically connected to a bus bar disposed at a second end of the battery opposite the first end.

2. The battery of Claim 1, wherein:
(i) the cathode connection portion of each cathode of the plurality of cathodes extends from between a first edge of the separator film and a second edge of the separator film opposite the first edge to past the first edge of the separator film, and wherein the anode connection portion of each anode of the plurality of cathodes extends from between the first edge of the separator film and the second edge of the separator film to past the second edge of the separator film; and optionally or preferably wherein
(ii) the cathode connection portion of each cathode of the plurality of cathodes extends past the first edge by about 1 mm, and wherein the anode connection portion of each anode of the plurality of anodes extends past the second edge by about 1 mm.

3. The battery of Claim 1 or Claim 2, wherein:
(i) the separator film is formed in an accordion arrangement
(ii) the anode material comprises graphite, and wherein the cathode material comprises lithium cobalt oxide (LiCoO₂).

4. The battery of Claim 1 or Claim 2 or Claim 3, wherein the cathode connection portions of the cathodes of the plurality of cathodes are connected to each other, and wherein end surfaces of the cathode connection portions are connected to the bus bar disposed at the first end of the battery, and wherein the anode connection portions of the anodes of the plurality of anodes are connected to each other, and wherein end surfaces of the anode connection portions are connected to the bus bar disposed at the second end of the battery.

5. The battery of any of Claims 1 to 4 wherein the cathode connection portion of each cathode of the plurality of cathodes is individually connected to the bus bar disposed at the first end of the battery, and wherein the anode connection portion of each anode of the plurality of anodes is individually connected to the bus bar disposed at the second end of the battery.

6. A battery pack, comprising:
a plurality of bus bars; and
a plurality of cells, each cell comprising:
a separator film; and
an electrode stack comprising a plurality of electrodes, each electrode of the plurality of electrodes having an electrode base and an electrode material disposed on the electrode base, wherein a first end of the electrode base of the respective electrode has an electrode connection portion that is free of the electrode material, wherein the electrode material of the respective electrode extends contiguously across a width of the electrode base of the respective electrode, and further extends contiguously from a second end of the electrode base of the respective electrode opposite the first end to the electrode connection portion of the respective electrode, and wherein the electrode connection portion of the respective cathode extends contiguously across the width of the electrode base of the respective electrode, wherein adjacent electrodes of the plurality of electrodes are separated from each other by a portion of the separator film, and wherein first electrode connection portions of a first group of electrodes of the plurality of electrodes extend from between a first edge of the separator film and a second edge of the separator film opposite the first edge to past the first edge of the separator film and are electrically connected to form a first terminal, wherein second electrode connection portions of a second group of electrodes of the plurality of electrodes extend from between the first edge of the separator film and the second edge of the separator film to past the second edge of the separator film, and are electrically connected to form a second terminal;
wherein each bus bar of the plurality of bus bars connects cells of a first group of cells of the plurality of cells in parallel by connecting the first terminals or the second terminals of the cells of the first group of cells to each other, and wherein at least one of the bus bars connects a second group of cells of the plurality of cells in series with a third group of cells by connecting the first terminals of the cells of the first group of cells to the second terminals of the cells of the second group of cells.

7. The battery pack of Claim 6, wherein:
(i) the electrode connection portion of each electrode of the plurality of electrodes of each cell in the plurality of cells extends past a respective edge of the separator film edge by about 1 mm; and/or
(ii) the separator film of each cell of the plurality of cells is formed in an accordion arrangement.

8. The battery pack of Claim 6 or Claim 7, wherein the electrode connection portions of the electrodes of the first group of electrodes in each cell are crimped together to form the first terminal of the respective cell and are connected to a first bus bar of the plurality of bars; and
wherein the electrode connection portions of the electrodes of the second group of electrodes in each cell are crimped together to form the second terminal of the respective cell and are connected to a second bus bar of the plurality of bars.

9. The battery pack of Claim 6 or Claim 7 or Claim 8, wherein:
(i) the plurality of bus bars retain the cells of the plurality of cells in a series-parallel configuration; and/or
(ii) each bus bar of the plurality of bus bars retains cells connected to the respective bus bar with an airflow path between adjacent cells.

10. A method for providing a battery, comprising:
providing a separator film;
providing a plurality of cathodes, each cathode of the plurality of cathodes having a cathode base and a cathode material disposed on the cathode base, wherein a first end of the cathode base of the respective cathode has a cathode connection portion that is free of the cathode material, wherein the cathode material of the respective cathode extends contiguously across a width of the cathode base of the respective cathode, and further extends contiguously from a second end of the cathode base of the respective cathode opposite the first end to the cathode connection portion of the respective cathode, and wherein the cathode connection portion of the respective cathode extends contiguously across the width of the cathode base of the respective cathode;
providing a plurality of anodes, each anode of the plurality of anodes having an anode base and an anode material disposed on the anode base, wherein a first end of the anode base of the respective anode has an anode connection portion that is free of the anode material, wherein the anode material of the respective anode extends contiguously across a width of the anode base of the respective anode, and further extends contiguously from a second end of the anode base of the respective anode opposite the first end to the anode connection portion of the respective anode, and wherein the anode connection portion of the respective anode extends contiguously across the width of the anode base of the respective anode;
disposing the plurality of cathodes on a first side of the separator film, wherein the cathode connection portion of each cathode of the plurality of cathodes extends from between a first edge of the separator film and a second edge of the separator film opposite the first edge to past the first edge of the separator film,
disposing the plurality of anodes on a second side of the separator film, wherein the anode connection portion of each anode of the plurality of cathodes extends from between the first edge of the separator film and the second edge of the separator film to past the second edge of the separator film;
forming an electrode stack from the separator film, the plurality of cathodes and the plurality of anodes, wherein the electrode stack has alternating anodes and cathodes, and wherein each cathode of the plurality of cathodes is separated in the electrode stack from each other cathode of the plurality of cathodes, and from each anode of the plurality of anodes by a portion of the separator film;
electrically connecting the cathode connection portions of the cathodes of the plurality of cathodes to a first bus bar disposed at a first end of the battery; and
electrically connecting anode connection portions of the anodes of the plurality of anodes to a second bus bar disposed at a second end of the battery opposite the first end.

11. The method of Claim 10, wherein the cathode connection portion of each cathode of the plurality of cathodes extends past the first edge by about 1 mm, and wherein the anode connection portion of each anode of the plurality of anodes extends past the second edge by about 1 mm.

12. The method of Claim 10 or Claim 11, wherein:
(i) the forming an electrode stack comprises forming the separator film is formed into an accordion arrangement; and/or
(ii) the anode material comprises graphite, and wherein the cathode material comprises lithium cobalt oxide (LiCoO₂).

13. The method of any of Claims 10 to 12, wherein the electrically connecting the cathode connection portions of the cathodes to the first bus bar comprises bonding the cathode connection portions of the cathodes of the plurality of cathodes to each other, and connecting the bonded cathode connection portions to the first bus bar; and
wherein the electrically connecting the anode connection portions of the anodes to the second bus bar comprises bonding the anode connection portions of the anodes of the plurality of anodes to each other, and connecting the bonded anode connection portions to the second bus bar.

14. The method of any of Claims 10 to 13, wherein the electrically connecting the cathode connection portions to the bus bar comprises bending each of the cathode connection portions and individually bonding each of the cathode connection portions to the bus bar disposed at the first end of the battery; and
wherein the electrically connecting the anode connection portions to the bus bar comprises bending each of the anode connection portions and individually bonding each of the anode connection portions to the bus bar disposed at the second end of the battery.

15. The method of any of Claims 10 to 14, further comprising providing the battery in a battery pack and as part of a first group of cells that are electrically connected to each other in parallel and that are electrically connected to each other by the first bus and the second bus; and
providing the first group of cells in series with a second group of cells having second cells electrically connected to each other in parallel, and wherein the first group of cells and the second group of cells are all connected to one of the first bus bar or the second bus bar;
wherein the first bus bar and second bus bar retain the cells of the first group of cells with airflow paths between adjacent cells of the first group of cells.
